# EUROPÄISCHE PATENTANMELDUNG

(11) **EP 1 674 763 A2**
(43) Veröffentlichungstag der Anmeldung: **28.06.2006**
(21) Anmeldenummer: 05025605.6
(22) Anmeldetag: 24.11.2005
(51) Int. Cl.: F16H 25/22, B22F 5/06

(54) **Verfahren zur Herstellung eines Kugelgewindetriebs und Kugelgewindetrieb**

(30) Priorität: 23.12.2004 DE 102004063203
(71) Anmelder: Danaher Linear GmbH, 72649 Wolfschlugen (DE)
(72) Erfinder: Becker, Wolfgang, 71111 Waldenbuch (DE); Branz, Ralf, 71088 Holzgerlingen (DE); Schröppel, Winfried, 72800 Eningen u. A. (DE)
(74) Vertreter: Hoeger, Stellrecht & Partner Patentanwälte

(57) **Zusammenfassung**

Es wird ein Verfahren zur Herstellung eines Kugelgewindetriebs, welcher mindestens ein pulvermetallurgisch hergestelltes Element aufweist, vorgeschlagen, bei dem das mindestens eine Element aus einer Mehrzahl von Teilen hergestellt wird, wobei mindestens ein erster Vorkörper (48) mit einem ersten Fügebereich (52) und ein zweiter Vorkörper (50) mit einem zweiten Fügebereich (54) hergestellt werden und der erste Vorkörper (48) und der zweite Vorkörper (50) über den ersten Fügebereich (52) und den zweiten Fügebereich (54) vor dem Sintern und/oder beim Sintern in Kontakt gebracht sind oder werden.

## Beschreibung

Die Erfindung betrifft ein Verfahren zur Herstellung eines Kugelgewindetriebs.

Die Erfindung betrifft ferner einen Kugelgewindetrieb.

Kugelgewindetriebe sind beispielsweise in der EP 1 350 988 A1 oder der US 2,450,282 beschrieben.

Der Erfindung liegt die Aufgabe zugrunde, ein Verfahren zur Herstellung eines Kugelgewindetriebs bereitzustellen, welches sich auf einfache Weise durchführen läßt und mit dem sich sicher funktionierende Kugelgewindetriebe herstellen lassen.

Diese Aufgabe wird bei dem eingangs genannten Verfahren erfindungsgemäß dadurch gelöst, daß mindestens ein pulvermetallurgisch hergestelltes Element vorgesehen ist, wobei bei dem erfindungsgemäßen Verfahren das mindestens eine Element aus einer Mehrzahl von Teilen hergestellt wird, wobei mindestens ein erster Vorkörper mit einem ersten Fügebereich und ein zweiter Vorkörper mit einem zweiten Fügebereich hergestellt werden und der erste Vorkörper und der zweite Vorkörper über den ersten Fügebereich und den zweiten Fügebereich vor dem Sintern und/oder beim Sintern in Kontakt gebracht sind oder werden.

Über Metallpulversinterung lassen sich Bauteile herstellen, die geringe Maßtoleranzen aufweisen und eine hohe Festigkeit aufweisen, da die Rißbildung im wesentlichen verhindert ist.

Es wird dabei üblicherweise aus einem Metallpulver-Bindemittel-Gemisch ein Formteil hergestellt, bei dem die Pulverpartikel einen gewissen Zusammenhalt haben. Dieses Formteil wird als Grünteil bezeichnet. Es umfaßt Bindemittel beispielsweise in der Größenordnung von ca. 10 Gew.%. Dieses Grünteil wird durch partielles Entfernen von Bindemittel, beispielsweise chemisch oder physikalisch (beispielsweise durch Schmelzen), in ein Braunteil umgewandelt. Das Braunteil ist porös. Das Braunteil wird dann unter Wärmezufuhr beispielsweise in einem Ofen gesintert. Durch das Sintern nimmt die Porosität ab und das Volumen des Werkstücks nimmt ab. Weiterhin verfestigt sich das entsprechende Werkstück. Außerdem wird das Bindemittel restlos herausgelöst. Das hergestellte Werkstück hat metallische Eigenschaften.

Sintern ist das Stückigmachen (Verfestigung) feinkörniger Stoffe durch Wärmebehandlung unterhalb der Schmelztemperatur.

Ein Beispiel eines pulvermetallurgischen Herstellungsverfahrens ist Metallpulverspritzgießen (MIM - Metal Injection Molding), bei dem die Formgebung des Grünlings über (Spritz-)Gießen erfolgt. Es ist auch möglich, eine Formgebung über Pressen durchzuführen oder eine plastische Formgebung vorzusehen, beispielsweise über Extrudieren.

Es hat sich gezeigt, daß, wenn der erste Vorkörper und der zweite Vorkörper beim Sintern in Kontakt miteinander stehen, sich dadurch ein einstückiges Element aus zwei oder mehr Teilen herstellen läßt. Es wird dabei eine metallurgische Verbindung zwischen den Teilen erreicht, so daß keine zusätzlichen Verbindungselemente wie Schrauben oder Bolzen benötigt werden und auch kein Klebematerial benötigt wird.

Durch das erfindungsgemäße Verfahren läßt sich ein einstückiges Element aus einer Mehrzahl von Teilen herstellen. Dadurch ist es möglich, Strukturen an dem mindestens einen Element herzustellen, welche sich bei anderen Herstellungsarten nicht oder nur unter hohem Aufwand realisieren lassen; insbesondere lassen sich Strukturen herstellen, die sonst nicht oder nur unter hohem Aufwand beispielsweise durch spanabhebende Materialbearbeitung oder durch Gießen mit verlorenen Kernen herstellbar sind. Durch das erfindungsgemäße Verfahren können getrennt Halbteile hergestellt werden, wobei diese sich mit Ausnehmungen versehen lassen, die sich dann an dem fertiggestellten Element beispielsweise zu einer Kanalstruktur ergänzen. Auf diese Weise lassen sich beispielsweise Umlenkstücke für Wälzkörper herstellen, die mit einem innenliegenden Kanal versehen sind, der sonst nicht oder nicht wirtschaftlich herstellbar wäre.

Durch das erfindungsgemäße Verfahren ist es auch möglich, Elemente herzustellen, bei denen eine Mehrzahl von Teilen integral und insbesondere metallurgisch miteinander verbunden sind. Beispielsweise lassen sich so Umlenkelemente in eine Gewindemutter oder Gewindespindel integrieren. Beispielsweise ist es auch möglich, eine Gewindespindel mit einem oder mehreren Hohlräumen herzustellen.

Durch das erfindungsgemäße Verfahren ist es auch möglich, Vorkörper dadurch miteinander zu verbinden, daß die Volumenverringerung bei der Entbinderung (insbesondere bei der Umwandlung eines Grünteil-Vorkörpers in einen Braunteil-Vorkörper oder auch beim Sintern) genutzt wird. Dadurch läßt sich ein Vorkörper auf einen anderen aufschrumpfen oder es läßt sich eine formschlüssige Verbindung beispielsweise mittels Hinterschneidungen erreichen. Diese "Volumenverringerungs-Verbindung" kann auch hergestellt werden, ohne daß eine metallurgische Verbindung zwischen den Vorkörpern hergestellt wird.

Es ist grundsätzlich möglich, daß die Vorkörper vor oder während der Sinterung gefügt werden. Durch die Sinterung entsteht ein einstückiges Werkstück mit einer metallischen Verbindung der Vorkörper. Eine Fügung vor der Sinterung kann beispielsweise an Grünteilen auch über Reibungsschweißen oder Spiegelschweißen erfolgen.

Vorteilhafterweise werden der erste Vorkörper und der zweite Vorkörper als getrennte Formteile hergestellt. Bei der Herstellung von Formteilen werden die Metallpulvermassen so geformt, daß wenigstens ein minimaler Zusammenhalt der Pulverpartikel gegeben ist. Formteile lassen sich beispielsweise durch Pressen oder durch plastische Formgebung wie Extrudieren herstellen. Auch die Herstellung mittels Gießen oder Spritzgießen ist möglich.

Insbesondere werden der erste Vorkörper und der zweite Vorkörper als getrennte Grünteile und/oder Braunteile hergestellt. Ein Grünteil wird insbesondere als Formteil hergestellt. Dem Grünteil läßt sich die entsprechende Gestalt geben.

Insbesondere wird der erste Vorkörper und/oder der zweite Vorkörper mit einer Wälzkörperführung versehen. Dies läßt sich über eine oder mehrere Ausnehmungen auf einfache Weise an einem Formteil realisieren. Die endgültige Wälzkörperführung an dem hergestellten Element wird durch die Kombination von Ausnehmungen an den Vorkörpern und Weiterbearbeitung der Vorkörper erreicht.

Insbesondere werden mindestens zwei Grünteil-Vorkörper hergestellt, welche in einen oder mehrere Braunteil-Vorkörper umgewandelt werden und der oder die Braunteil-Vorkörper werden gesintert.

Es ist dabei möglich, daß die Vorkörper erst beim Sintern in Kontakt gebracht sind. Es ist grundsätzlich auch möglich, daß bei der Braunteil-Herstellung der erste Vorkörper und der zweite Vorkörper in Kontakt gebracht sind, d. h. daß die Grünteil-Vorkörper in Kontakt gebracht werden und beim Entfernen von Bindemitteln die Grünteil-Vorkörper in Kontakt stehen. Dadurch entsteht eine Braunteil-Kombination, in der die Vorkörper bereits verbunden sein können. Es ist dabei grundsätzlich möglich, daß Fügebereiche vor dem Inkontaktbringen aufgeschmolzen wurden.

Insbesondere ist es vorgesehen, daß beim Sintern der erste Vorkörper und der zweite Vorkörper in Kontakt gebracht sind. Dazu werden beispielsweise getrennte zu sinternde Teile wie Braunteile vor dem Sintern in Kontakt gebracht oder eine Braunteil-Kombination, bei der Braunteile bereits in Kontakt gebracht sind, wird gesintert.

Grundsätzlich ist es dabei möglich, daß ein erster Braunteil-Vorkörper und ein zweiter Braunteil-Vorkörper getrennt hergestellt werden und diese Braunteil-Vorkörper dann in Kontakt gebracht werden. Beim Sintern läßt sich eine metallurgische Verbindung zur Herstellung eines einstückigen Elements erreichen.

Beispielsweise werden zur Herstellung einer Verbindung der erste Vorkörper und der zweite Vorkörper aneinander positioniert und insbesondere werden die Vorkörper in Berührung (über die jeweiligen Fügebereiche) gebracht. Beispielsweise wird der erste Vorkörper an den zweiten Vorkörper angelegt, um einen Kontakt herzustellen. Dadurch läßt sich auf einfache Weise eine metallurgische Verbindung erreichen, um ein einstückiges Element zu erhalten.

Vorteilhaft ist es, wenn der erste Vorkörper mit dem zweiten Vorkörper durch Volumenverringerung beim Entbindern und/oder Sintern verbunden wird. Dadurch läßt sich eine nicht-metallurgische Verbindung erreichen, über die beispielsweise die Vorkörper für die Sinterung aneinander positioniert werden. Mit dieser nicht-metallurgischen Verbindung läßt sich dann eine metallurgische Verbindung herstellen.

Es kann vorgesehen sein, daß ein Braunteil-Vorkörper und ein Grünteil-Vorkörper getrennt hergestellt werden und eine Verbindung zwischen den Vorkörpern über die Braunteilwandlung des Grünteil-Vorkörpers erfolgt. Ein Braunteil-Vorkörper wird durch Entbinderung eines Grünteil-Vorkörpers hergestellt, wobei eine Volumenverringerung eintritt. Diese Volumenverringerung kann dazu genutzt werden, eine Verbindung herzustellen, die auch nichtmetallurgisch sein kann. Wenn der Grünteil-Vorkörper ebenfalls in einen Braunteil-Vorkörper umgewandelt wird, dann läßt er sich beispielsweise auf den anderen Vorkörper aufschrumpfen oder es kann ein Formschluß beispielsweise über Hinterschneidungen hergestellt werden.

Es ist dann besonders vorteilhaft, wenn der Grünteil-Vorkörper mit einer oder mehreren Aufnahmen für einen Verbindungsbereich des Braunteil-Vorkörpers hergestellt wird. In die Aufnahme oder Aufnahmen kann dann der Braunteil-Vorkörper eingelegt werden. Wenn der Grünteil-Vorkörper entbindert wird, dann verringert sich dessen Volumen und es kann dadurch ein mechanischer Kontakt hergestellt werden, der zu einer Verbindung führt; die Verbindung wird beispielsweise durch Aufschrumpfen hergestellt. Es ist auch möglich, daß ein Formschluß hergestellt wird, indem beispielsweise Hinterschneidungen vorgesehen werden. Auf diese Weise läßt sich beispielsweise ein Umlenkstück an einer Gewindemutter fixieren.

Günstig ist es, wenn der Grünteil-Vorkörper über Entbinderung auf den Braunteil-Vorkörper aufgeschrumpft wird und/oder ein Formschluß erzeugt wird. Dadurch läßt sich eine nicht-metallurgische Verbindung erzielen, wobei es grundsätzlich möglich ist, durch nachträgliches Sintern eine metallurgische Verbindung herzustellen.

Ganz besonders vorteilhaft ist es, wenn der erste Fügebereich und der zweite Fügebereich so aneinander angepaßt ausgebildet werden, daß bei korrekter Positionierung aneinander die relative Bewegung des ersten Vorkörpers und des zweiten Vorkörpers mindestens in einer Richtung gesperrt wird. Dadurch läßt sich mindestens in der Sperrichtung eine Fixierung erreichen. Außerdem läßt sich die korrekte Positionierung auf einfache Weise erreichen und auch fixieren.

Beispielsweise werden der erste Fügebereich und der zweite Fügebereich so aneinander angepaßt ausgebildet, daß der eine Fügebereich mindestens eine Ausnehmung aufweist, in welcher ein zugeordnetes Anlageelement des anderen Fügebereichs anlegbar ist. Dadurch läßt sich ein Ineinandergreifen von Anlageelementen in Ausnehmungen erreichen, um eine Fixierung der beiden Vorkörper mindestens bezüglich einer Richtung zu erhalten. Es kann dabei ein Fügebereich sowohl eine oder mehrere Ausnehmungen als auch eine oder mehrere Anlageelemente aufweisen. Solche Anlageelemente sind beispielsweise zungenförmig ausgebildet und können auch als Eintauchbereiche ausgebildet sein.

Ganz besonders vorteilhaft ist es, wenn der erste Vorkörper und der zweite Vorkörper gleich ausgebildet werden. Dadurch läßt sich die Herstellung vereinfachen. Beispielsweise wird dann der erste Vorkörper und der zweite Vorkörper in der gleichen (nicht notwendigerweise in derselben) Form hergestellt.

Insbesondere wird das mindestens eine Element mit einer Wälzkörperführung versehen. Diese Wälzkörperführung wird dabei insbesondere durch Teilführungen in den Vorkörpern hergestellt, wobei diese Teilführungen insbesondere über Ausnehmungen gebildet sind. Die Ausnehmungen ergänzen sich dann in dem hergestellten Element zu der Wälzkörperführung.

Beispielsweise ist das mindestens eine Element ein Umlenkstück für Wälzkörper. Solche Umlenkstücke werden beispielsweise an einer Gewindemutter angeordnet, um Wälzkörper zurückzuführen. Wenn ein Umlenkstück an einem Endbereich einer Gewindemutter angeordnet ist, dann ist es vorteilhaft, wenn ein solches Umlenkstück einen geschlossenen (bis auf einen Eingang und Ausgang) innenliegenden Führungskanal aufweist. Solche Führungskanäle sind aufwendig herzustellen. Bei entsprechender Formgebung ist es unter Umständen nicht möglich, diese durch spanabhebende Materialverarbeitung oder durch Gießen mit verlorenem Kern herzustellen. Durch die erfindungsgemäße Lösung lassen sich grundsätzlich beliebige Kanalformen herstellen. Dadurch läßt sich eine Optimierung der Wälzkörperumlenkung erreichen, ohne über das Herstellungsverfahren an bestimmte Formen gebunden zu sein. Weiterhin ist es nicht notwendig, zur Herstellung des Elements Teile über zusätzliche Verbindungsmittel wie Schrauben oder Bolzen oder Klebemittel miteinander zu verbinden.

Es ist auch möglich, daß das mindestens eine Element eine Gewindemutter ist.

Beispielsweise sind ein oder mehrere Umlenkelemente an der Gewindemutter angeordnet. Das oder die Umlenkelemente lassen sich mittels dem erfindungsgemäßen Verfahren einstückig mit der Gewindemutter verbinden.

Beispielsweise werden eine oder mehrere Umlenkleisten hergestellt, die an der Gewindemutter angeordnet werden, wobei durch das erfindungsgemäße Verfahren eine metallurgische Verbindung zwischen der einen oder mehreren Umlenkleisten und der Gewindemutter erreicht wird.

Es ist auch möglich, daß das mindestens eine Element eine Gewindespindel ist.

Beispielsweise weist die Gewindespindel einen oder mehrere Hohlräume auf. Eine solche Gewindespindel weist eine verringerte Masse auf, was für bestimmte Anwendungen vorteilhaft sein kann. Die Gewindespindel läßt sich aus einem ersten Vorkörper und einem zweiten Vorkörper als jeweilige Halbteile herstellen, wobei die hergestellte Gewindespindel einstückig mit integriertem Hohlraum oder integrierten Hohlräumen ist.

Es ist auch möglich, daß ein oder mehrere Umlenkelemente an der Gewindespindel angeordnet werden, wobei insbesondere eine metallurgische Verbindung erreicht wird.

Insbesondere werden der erste Vorkörper und der zweite Vorkörper metallurgisch verbunden, d. h. in dem hergestellten mindestens einen Element liegt eine metallurgische Verbindung zwischen den (ehemaligen) Vorkörpern vor, so daß das mindestens eine Element einstückig ist.

Der erste Vorkörper und der zweite Vorkörper werden insbesondere schraubenfrei und bolzenfrei und kleberfrei verbunden. Die Verbindung erfolgt beispielsweise bei der Braunteil-Herstellung und/oder dem Sintern.

Der Erfindung liegt ferner die Aufgabe zugrunde, einen Kugelgewindetrieb bereitzustellen, welcher auf einfache Weise herstellbar ist und welcher sicher funktioniert.

Diese Aufgabe wird erfindungsgemäß dadurch gelöst, daß mindestens ein Element vorgesehen ist, welches pulvermetallurgisch hergestellt ist, wobei das mindestens eine Element mehrteilig hergestellt ist und die Teile über einen Verbindungsbereich, welcher jeweilige Fügebereiche der Teile umfaßt, metallurgisch verbunden sind.

Der erfindungsgemäße Kugelgewindetrieb weist die bereits im Zusammenhang mit dem erfindungsgemäßen Herstellungsverfahren erläuterten Vorteile auf.

Weitere vorteilhafte Ausführungsformen wurden ebenfalls bereits im Zusammenhang mit dem erfindungsgemäßen Verfahren erläutert.

Durch die metallurgische Verbindung werden keine zusätzlichen Verbindungsmittel wie Schrauben oder Bolzen oder Klebemittel erforderlich.

Günstig ist es, wenn das mindestens eine Element eine oder mehrere Ausnehmungen aufweist. Die Ausnehmungen können so ausgebildet sein, daß Wälzkörper in ihnen führbar sind.

Insbesondere weist das mindestens eine Element eine oder mehrere Führungen für Wälzkörper auf. Es kann sich dabei um offene oder geschlossene Kanäle für Wälzkörper handeln.

Insbesondere kann es vorgesehen sein, daß die mindestens eine Führung geschlossen ist und einen Eingang und Ausgang aufweist. Es kann sich bei der Führung um einen geschlossenen Kanal handeln, welcher an einem einstückigen Umlenkstück angeordnet ist. Über einen solchen Kanal läßt sich eine Umlenkung von Wälzkörpern zur Rückführung erreichen.

Beispielsweise ist das mindestens eine Element ein Umlenkstück.

Ein solches Umlenkstück weist vorteilhafterweise eine innenliegende Wälzkörperführungsbahn auf. Diese läßt sich mit dem erfindungsgemäßen Verfahren auf einfache Weise herstellen und optimieren, ohne daß man Einschränkungen unterworfen ist beispielsweise bezüglich spanabhebender Materialbearbeitung oder Gießen mit verlorenem Kern.

Es ist auch möglich, daß das mindestens eine Element eine Gewindemutter ist.

Beispielsweise sind an der Gewindemutter ein oder mehrere Umlenkelemente angeordnet. Diese Umlenkelemente lassen sich einstückig an der Gewindemutter anordnen, wobei eine metallurgische Verbindung zwischen dem oder den Umlenkelementen und dem Rest der Gewindemutter erreicht ist.

Es ist ebenfalls möglich, daß das mindestens eine Element eine Gewindespindel ist.

Beispielsweise ist die Gewindespindel eine Hohlspindel. Die Hohlspindel weist einen oder mehrere innere Hohlräume auf. Durch den oder die Hohlräume ist die Masse der Gewindespindel verringert. Erfindungsgemäß läßt sich eine metallurgische Verbindung zwischen Halbteilen der Hohlspindel erreichen.

Es ist auch möglich, daß ein oder mehrere Umlenkelemente an der Gewindespindel angeordnet sind und dabei insbesondere in die Gewindespindel integriert sind, so daß die Gewindespindel einstückig ausgebildet ist; die Verbindung ist dabei eine metallurgische Verbindung.

Die nachfolgende Beschreibung bevorzugter Ausführungsformen dient im Zusammenhang mit der Zeichnung der näheren Erläuterung der Erfindung. Es zeigen:
- Figur 1: eine perspektivische Teilschnittdarstellung eines Ausführungsbeispiels eines Kugelgewindetriebs;
- Figur 2: eine schematische Darstellung eines ersten Vorkörpers und eines zweiten Vorkörpers zur Herstellung eines Umlenkstücks;
- Figur 3: eine schematische perspektivische Teildarstellung einer Gewindemutter mit integriertem Umlenkelement;
- Figur 4: eine schematische perspektivische Darstellung eines Teilabschnitts eines Gewindespindel-Vorkörpers mit zu integrierendem Umlenkelement-Vorkörper;
- Figur 5: die Gewindespindel gemäß Figur 4 mit integriertem Umlenkelement;

- Figur 6: eine schematische Darstellung eines ersten Vorkörpers und eines zweiten Vorkörpers zur Herstellung einer Hohlspindel; und
- Figur 7(a), (b), (c): schematisch verschiedene Schritte zur Erläuterung eines weiteren Ausführungsbeispiels des erfindungsgemäßen Verfahrens.

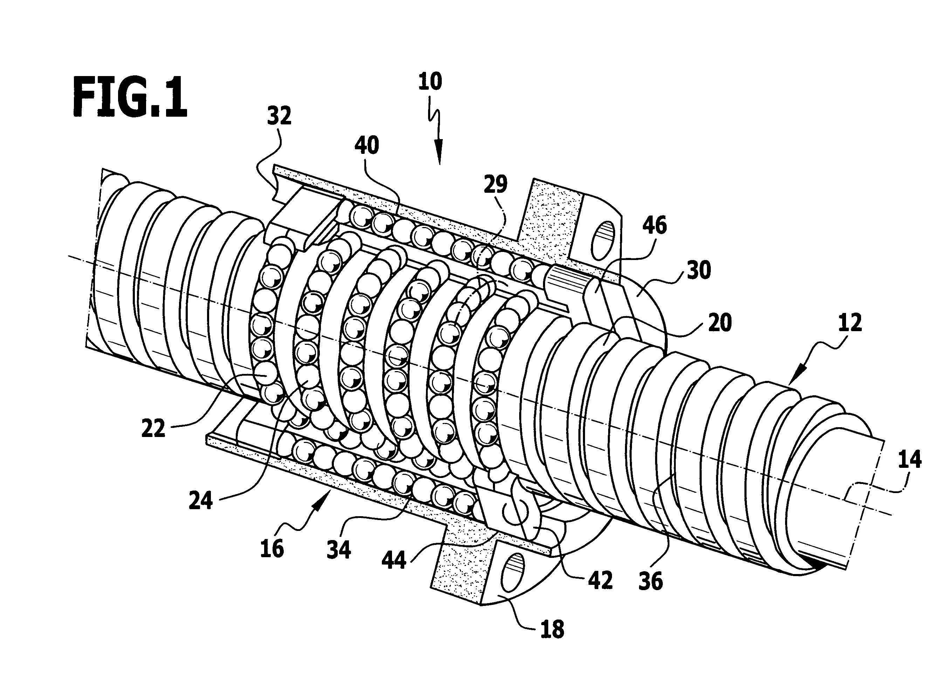

Ein Ausführungsbeispiel eines Kugelgewindetriebs oder Wälzkörpertriebs, welcher in Figur 1 gezeigt und dort mit 10 bezeichnet ist, umfaßt eine Gewindespindel 12, welche sich in einer Spindelachse 14 erstreckt. Die Spindelachse 14 definiert eine axiale Richtung.

Eine Gewindemutter 16 umgibt die Gewindespindel 12, wobei die Gewindespindel 12 in der Gewindemutter 16 drehverschieblich geführt ist. Durch Drehung der Gewindespindel 12 um die Achse 14 läßt sich die Gewindemutter 16 relativ zur Gewindespindel 12 längs der Achse 14 verschieben, wobei die Verschiebungsrichtung abhängig ist von der Drehrichtung. Wenn die Gewindespindel 12 translationsfest gehalten ist und um die Spindelachse 14 gedreht wird, dann läßt sich dadurch die Gewindemutter 16 parallel zur Spindelachse 14 verschieben. Wenn die Gewindemutter 16 translationsfest gehalten wird und gedreht wird, dann läßt sich dadurch die Gewindespindel 12 parallel zur Spindelachse 14 verschieben.

Die Gewindemutter 16 ist mit einem äußeren Flansch 18 versehen, über welchen die Gewindemutter 16 beispielsweise an einem Schlitten montierbar ist. Wenn die Gewindespindel 12 translationsfest gehalten wird und drehend angetrieben wird, dann läßt sich beispielsweise ein Schlitten, welcher über den Flansch 18 mit der Gewindemutter 16 verbunden ist, parallel zur Spindelachse 14 verschieben, wobei die Verschiebungsrichtung durch die Drehrichtung der Gewindespindel 12 bestimmt ist.

Die Gewindespindel 12 ist mit mindestens einem sich schraubenförmig um die Spindelachse 14 wickelnden Gewindekanal 20 versehen, in dem eine endlose Reihe 22 von Wälzkörpern und insbesondere Wälzkörperkugeln 24 geführt ist.

Die Gewindemutter 16 weist auf ihrer der Gewindespindel 12 zuweisenden Innenseite 26 einen an den Gewindekanal 20 angepaßten schraubenförmigen Gewindekanal 28 auf, in welchen die Wälzkörperkugeln 24 ebenfalls eintauchen. Die Gewindekanäle 20 und 28 bilden dadurch gemeinsam eine Wälzkörperführungsbahn. Ein Kugelmittenkreis 29 der Gewindemutter 16 ist derjenige Führungskreis, auf welchem die Wälzkörperkugeln 24 im Gewindekanal 28 geführt sind, wobei im Kugelmittenkreis 29 der größte Querabstand zur Spindelachse 14 vorliegt.

Bei dem gezeigten Ausführungsbeispiel ist zur Zurückführung von Wälzkörperkugeln 24 von einem Gewindekanalbereich, welcher in der Nähe eines Endes 30 der Gewindemutter 16 liegt, zu einem Gewindekanalbereich, welcher in der Nähe des anderen Endes 32 liegt, bzw. umgekehrt, und damit zur Schließung der Endlosreihe 22 der Wälzkörperkugeln 24, mindestens ein Rückführungskanal 34 vorgesehen. Dieser erstreckt sich in einer Innenwand der Gewindemutter 16 eingebettet im wesentlichen parallel zur axialen Richtung 14.

Der Kugelgewindetrieb 10, welcher in Figur 1 gezeigt, ist zweigängig, d. h. die Gewindespindel 12 weist den Gewindekanal 20 und einen dazu versetzten Gewindekanal 36 auf. Es ist dann neben dem Rückführungskanal 34, welcher für die Rückführung der in Gewindekanälen 20, 28 geführten Wälzkörperkugeln 24 sorgt, ein zweiter Rückführungskanal 40 vorgesehen, welcher für die Rückführung der in den Gewindekanälen 36, 38 geführten Wälzkörperkugeln 24 sorgt.

Die Rückführungskanäle 34 und 40 sind bei dem gezeigten Ausführungsbeispiel in der Gewindemutter 16 diametral beabstandet zueinander gebildet. Sie können aber auch gegenüber einem 180° Winkel versetzt zueinander angeordnet sein.

Ein Kugelgewindetrieb kann auch eingängig sein oder höhergängig als zweigängig sein.

Die Führungsrichtung der Wälzkörperkugeln 24 in dem jeweiligen Rückführungskanal 34 bzw. 40 ist im wesentlichen parallel zur axialen Richtung, während die Führungsrichtung in den Gewindekanälen 20, 28 und 36, 38 eine Querkomponente zur axialen Richtung 14 aufweist. Zur Überführung der Wälzkörperkugeln 24 aus den Gewindekanälen 20, 28 bzw. 36, 38 in die zugeordneten Rückführungskanäle 34 bzw. 40 und umgekehrt ist deshalb jeweils ein Umlenkelement 42 vorgesehen. Jedem Rückführungskanal 34 bzw. 40 sind zum Schließen der Endlosreihe 22 an Wälzkörperkugeln 24 jeweils zwei Umlenkelemente 42 zugeordnet, wobei ein erstes Umlenkelement im Stirnbereich des einen Endes 30 und das andere Umlenkelement im Stirnbereich des anderen Endes 32 der Gewindemutter 16 positioniert ist.

Für jedes Umlenkelement 42 umfaßt die Gewindemutter 16 eine entsprechende Aufnahme 44, in welcher das zugeordnete Umlenkelement 42 positioniert ist. Eine solche Aufnahme ist durch eine Ausnehmung in der Gewindemutter 16 gebildet, welche von einem stirnseitigen Ende 30 bzw. 32 her zugänglich ist, so daß das Umlenkelement 42 in einer Richtung parallel zur axialen Richtung 14 in die Aufnahme einsetzbar ist. Die Aufnahme 44 ist dabei so angepaßt an das Umlenkelement 42 ausgebildet, daß dessen Beweglichkeit in der Aufnahme 44 in jeder Querrichtung zur axialen Richtung 14 gesperrt ist, d. h. das Umlenkelement 42 drehfest bezogen auf jede potentielle, zur axialen Achse 14 parallelen Drehachse in der Aufnahme 44 sitzt.

Ein entsprechender Kugelgewindetrieb mit einer Gewindespindel und mit einer Gewindemutter, welche jeweils aneinander angepaßte Gewindekanäle aufweisen, in denen Wälzkörper geführt sind, und mit einem oder mehreren Rückführungskanälen zur Rückführung von Wälzkörpern mit einer im wesentlichen axialen Rückführungsrichtung, wobei zur Umlenkung aus einem Gewindekanal in einen Rückführungskanal oder umgekehrt ein Umlenkelement vorgesehen ist, und ein Umlenkelement und eine in der Gewindemutter angeordnete Aufnahme für das Umlenkelement so aneinander angepaßt ausgebildet sind, daß das Umlenkelement verschiebungsfest bezüglich jeder Querrichtung zur axialen Richtung in der Aufnahme positionierbar ist, ist in der EP 1 350 988 A1 beschrieben, auf die ausdrücklich Bezug genommen wird.

Ein Umlenkelement 42 ist insbesondere als Umlenkstück 46 ausgebildet, welches getrennt von der Gewindemutter 16 hergestellt ist.

Erfindungsgemäß ist es vorgesehen, daß mindestens ein Element eines Kugelgewindetriebs, insbesondere ein Umlenkstück und/oder eine Gewindespindel und/oder eine Gewindemutter, pulvermetallurgisch hergestellt ist. Bei dem Kugelgewindetrieb 10 sind insbesondere die Umlenkstücke 46 pulvermetallurgisch hergestellt.

Ein Beispiel eines pulvermetallurgischen Verfahrens ist das Metallpulverspritzgießen (MIM-Metal Injection Molding). Bei diesem wird zunächst mittels Metallpulver und Bindemittel über Spritzgießen ein Formteil (Grünteil) hergestellt; dieses Grünteil wird durch Entfernen (Herauslösen) von Bindemittel in ein Braunteil umgewandelt. Das Braunteil wird dann insbesondere in einem Ofen gesintert.

Das Grünteil wird als spritzgegossenes Formteil aus einem Metallpulver-Bindemittel-Gemisch hergestellt. Als Bindemittel werden beispielsweise Stärke, Zucker, spritzbare Kunststoffe usw. eingesetzt. Im Grünteil liegt typischerweise Bindemittel in einem Gewichtsanteil von ca. 10 % vor. Im Grünteil liegt eine im wesentlichen homogene Pulververteilung vor, wobei die Pulverpartikel nicht ausgerichtet sind.

Durch teilweises Entfernen von Bindemittel (Entbinderung) beispielsweise auf chemischem Wege oder auf physikalischem Wege (beispielsweise durch Schmelzen) wird ein poröser Körper, das Braunteil, hergestellt.

Das Braunteil wird dann gesintert; dadurch wird das Bindemittel vollständig entfernt und das entsprechende Werkstück wird verfestigt. Das so hergestellte Sinterteil ist nicht mehr offenporös. Sintern erfolgt in der Regel ohne externen Druck. Das Sinterteil ist ein reines Metallteil.

Zur Herstellung des entsprechenden Elements des erfindungsgemäßen Kugelgewindetriebs werden erfindungsgemäß getrennte Vorkörper hergestellt, die im Grünteil-Zustand und/oder im Braunteil-Zustand mit ihren entsprechenden Fügebereichen in Kontakt gebracht werden und beim Sintern in Kontakt miteinander stehen, um eine metallurgische Verbindung zwischen den Teilen zur Herstellung des Elements zu erhalten.

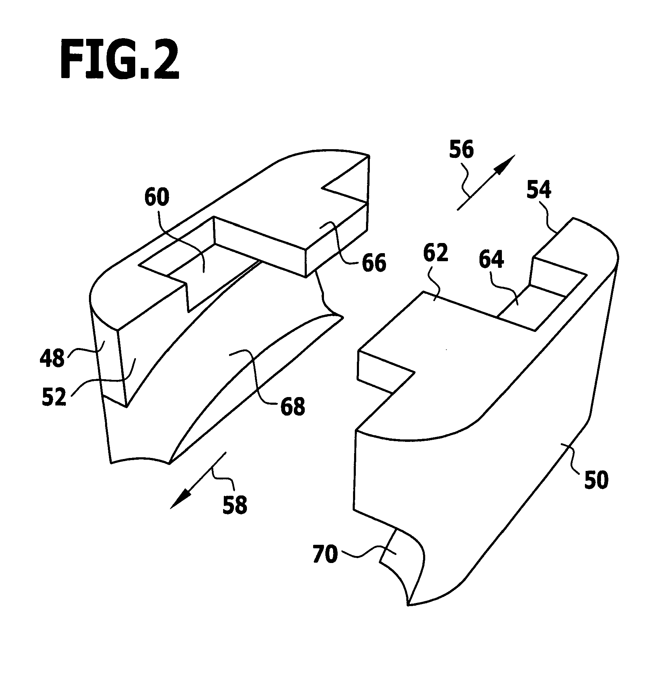

Bei einem Ausführungsbeispiel, bei dem ein Umlenkstück 46 beispielsweise mittels Metallpulverspritzgießen hergestellt wird, wird, wie in Figur 2 schematisch gezeigt, zunächst ein erster Vorkörper 48 und ein zweiter Vorkörper 50 jeweils als Grünteil hergestellt. Die beiden Vorkörper 48 und 50 werden dabei jeweils als spritzgegossene Formteile hergestellt.

Es kann vorgesehen sein, daß die beiden Vorkörper 48, 50 gleich ausgebildet sind, so daß die Formteilherstellung in der gleichen Form möglich ist. Es kann aber auch vorgesehen sein, daß die beiden Vorkörper 48, 50 unterschiedlicher geometrischer Gestalt sind.

Der erste Vorkörper 48 weist einen ersten Fügebereich 52 zur Verbindung mit dem zweiten Vorkörper 50 auf. Entsprechend weist der zweite Vorkörper 50 einen zweiten Fügebereich 54 zur Verbindung mit dem ersten Vorkörper 48 auf. Zur Verbindung der beiden Vorkörper 48, 50 werden die beiden Fügebereiche 52 und 54 in Kontakt gebracht.

Es kann vorgesehen sein, daß die Fügebereiche 52 und 54 so aneinander angepaßt ausgebildet sind, daß bei der entsprechenden Positionierung der beiden Vorkörper 48, 50 aneinander eine Auseinanderbewegung der beiden Vorkörper 48, 50 mindestens in eine Richtung gesperrt ist; beispielsweise ist die Bewegung in einer Richtung 56 quer zur Flächennormalen von Fügeflächen des ersten Fügebereichs 52 und des zweiten Fügebereichs 54 (und damit quer zur Verbindungsrichtung) und in einer Gegenrichtung 58 zu der Richtung 56 gesperrt.

Dazu umfaßt beispielsweise der erste Fügebereich 52 eine Ausnehmung 60, in die ein zapfenförmiges Anlageelement 62 des zweiten Fügebereichs 54 eintauchen kann. Ferner umfaßt der zweite Fügebereich 54 eine Ausnehmung 64, in die ein zapfenförmiges Anlageelement 66 des ersten Fügebereichs 52 eintauchen kann.

Wenn der Anlagebereich des Anlageelements 62 in der Ausnehmung 60 sitzt und der Anlagebereich des Anlageelements 66 in der Ausnehmung 64 sitzt, dann ist die relative Bewegung der Vorkörper 48 und 50 in den Richtungen 56 und 58 durch Aneinanderstoßen der jeweiligen Anlagebereiche gesperrt. Dadurch ist mindestens bezüglich der Richtungen 56, 58 für eine Positionierungsfixierung gesorgt.

Der erste Vorkörper 58 und der zweite Vorkörper 50 sind jeweils mit Ausnehmungen 68, 70 zur Bildung einer Wälzkörperführung versehen. Die Ausnehmungen 68, 70 werden an dem Formteil hergestellt. Bei den Ausnehmungen 68, 70 handelt es sich um Vertiefungen bezogen auf eine Oberfläche, so daß sie in einem Formteil auf einfache Weise erzeugbar sind.

Wenn die Vorkörper 48, 50 miteinander verbunden sind, dann bilden die Ausnehmungen 68, 70 eine geschlossene Wälzkörperführung mit einem Eingang und einem Ausgang für die Wälzkörper.

Erfindungsgemäß ist es vorgesehen, daß der erste Vorkörper 48 und der zweite Vorkörper 50 metallurgisch miteinander verbunden werden.

Aus den Grünteilen werden Braunteile hergestellt.

Bei einer Ausführungsform werden dabei die Braunteile aus den Grünteile-Vorkörpern 48 und 50 getrennt hergestellt.

Bei einer alternativen Ausführungsform werden die beiden Vorkörper 48, 50 über ihre Fügebereiche 52, 54 miteinander in Kontakt gebracht und diese Grünteile-Kombination wird in eine Braunteil-Kombination gewandelt. Dazu wird das Bindemittel entfernt, beispielsweise auf chemischem Wege oder durch Ausschmelzen.

Es ist dabei grundsätzlich möglich, daß ein Druck insbesondere parallel zur Flächennormalen von Fügeflächen der Fügebereiche 52, 54 ausgeübt wird.

Es ist ferner möglich, daß die Fügebereiche 52, 54 zuvor (vor der Fügung) aufgeschmolzen werden entsprechend einem Spiegelschweißverfahren.

Die getrennt hergestellten Braunteile oder die Braunteil-Kombination wird anschließend gesintert, wobei die entsprechenden Vorkörper über ihre Fügebereiche 52, 54 beim Sintern in mechanischem Kontakt stehen. Entweder werden die Braunteil-Vorkörper, welche getrennt hergestellt sind, in mechanischen Kontakt gebracht und diese Braunteil-Vorkörper-Kombination wird gesintert, oder die Braunteil-Kombination, bei der Vorkörper bereits in Kontakt gebracht sind, wird gesintert.

Dadurch entsteht ein metallurgischer Verbund zwischen den einzelnen Teilen, so daß das fertig hergestellte Element, beispielsweise ein Umlenkstück 46, einstückig ausgebildet ist und ein Verbindungsbereich, welcher den ersten Fügebereich 52 und den zweiten Fügebereich 54 der Vorkörper 48 und 50 umfaßt.

Es hat sich gezeigt, daß sich dadurch eine gute Verbindung mit guten metallurgischen Eigenschaften erzielen läßt, ohne daß zusätzliche Verbindungselemente und insbesondere Schrauben oder Bolzen verwendet werden müssen.

Durch das erfindungsgemäße Verfahren lassen sich in einem Umlenkstück 46 Wälzkörperführungen herstellen, die durch spanabhebende Materialbearbeitung an einem Werkstück nicht herstellbar sind oder nur unter hohem Aufwand in einem Gießverfahren mit einem verlorenen Kern herstellbar sind. Durch das erfindungsgemäße Verfahren läßt sich auf einfache Weise eine optimierte Kugelbahn in einem Umlenkstück 46 herstellen, ohne daß Einschränkungen bezüglich der Herstellbarkeit von einer Oberfläche her berücksichtigt werden müssen.

An den Vorkörpern 48, 50, die als Halbkörper ausgebildet werden, lassen sich auf einfache Weise Ausnehmungen herstellen, die dann an dem hergestellten Element sich zu einer geschlossenen Wälzkörperbahn ergänzen.

Die Verbindung zwischen den Halbkörpern läßt sich auf einfache und kostengünstige Weise erreichen.

Durch das beschriebene Verfahren läßt sich auch ein Element aus mehr als zwei Vorkörpern herstellen.

Beispielsweise lassen sich mit dem erfindungsgemäßen Verfahren auch Umlenkelemente mit der zugehörigen Gewindemutter oder Gewindespindel verbinden.

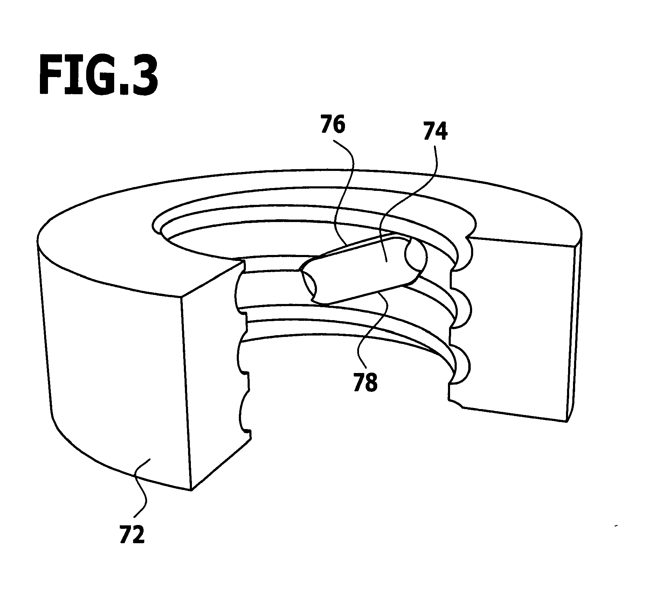

Bei einem weiteren Ausführungsbeispiel (Figur 3) ist es vorgesehen, daß ein erster Vorkörper 72 zur Bildung einer Gewindemutter als Grünteil hergestellt wird und als zweiter Vorkörper 74 ein Umlenkelement als Grünteil hergestellt wird. Der erste Vorkörper 72 weist einen ersten Fügebereich 76 auf, über den der zweite Vorkörper 74 mit dem ersten Vorkörper 72 verbindbar ist. Entsprechend weist der zweite Vorkörper 74 einen zweiten Fügebereich 78 auf, welcher zur Verbindung mit dem ersten Fügebereich 76 dient. Der erste Fügebereich 76 und der zweite Fügebereich 78 sind aneinander angepaßt ausgebildet.

Die beiden Vorkörper 72, 74 werden vor oder nach der Braunteilherstellung in Kontakt gebracht und miteinander in Kontakt stehend gesintert, wie oben anhand der Herstellung von Umlenkstücken 46 beschrieben.

Dadurch läßt sich der zweite Vorkörper 74 mit dem ersten Vorkörper 72 metallurgisch verbinden, ohne daß Schrauben oder Bolzen notwendig sind.

Es ist dadurch eine (einstückige) Gewindemutter bereitgestellt, in welche ein (oder mehrere) Umlenkelement zur Umlenkung von Wälzkörperkugeln integriert ist.

An dem zweiten Vorkörper 74 ist dabei eine Ausnehmung zur Führung von Wälzkörperkugeln gebildet.

Grundsätzlich ist es möglich, daß der zweite Vorkörper 74 selber wiederum mehrteilig ist und beispielsweise eine Braunteil-Kombination ist.

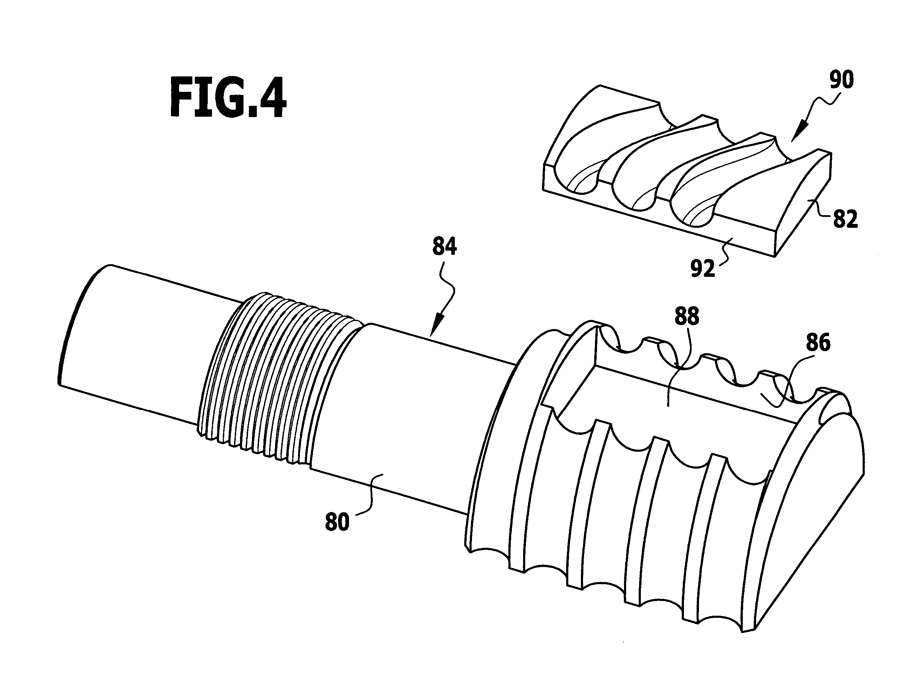

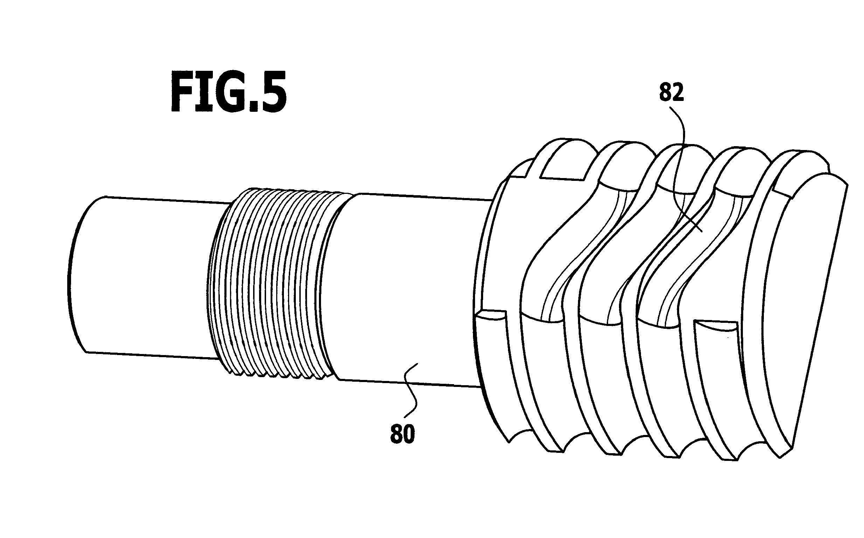

Bei einem weiteren Ausführungsbeispiel, welches in den Figuren 4 und 5 schematisch gezeigt ist, wird eine Gewindespindel 80 mit einem oder mehreren Umlenkelementen 82 (Figur 5) hergestellt.

Dazu wird als erster Vorkörper 84 eine Grünteil-Gewindespindel hergestellt, welche einen Bereich 86 aufweist, an dem ein Umlenkelement zu fixieren ist. Über den Bereich 86 ist ein erster Fügebereich 88 gebildet.

Es wird ferner als zweiter Vorkörper 90 eine Grünteil-Umlenkleiste hergestellt. Dieser zweite Vorkörper 90 weist einen zweiten Fügebereich 92 auf, welcher an den ersten Fügebereich 88 angepaßt ist.

Der zweite Vorkörper 90 und der erste Vorkörper 84 werden vor der Braunteil-Herstellung oder vor dem Sintern in Kontakt gebracht. Beispielsweise ist der erste Vorkörper 84 dabei so ausgebildet, daß der zweite Vorkörper 90 aufgelegt werden kann und dabei in seiner richtigen Position ist.

Es erfolgt danach der Sinterungsvorgang. Dadurch entsteht eine metallurgische Verbindung des Umlenkelements 82 mit der Gewindespindel 80 (Figur 5), d. h. es wird eine (einstückige) Gewindespindel 80 mit integriertem Umlenkelement 82 bzw. integrierten Umlenkelementen 82 hergestellt.

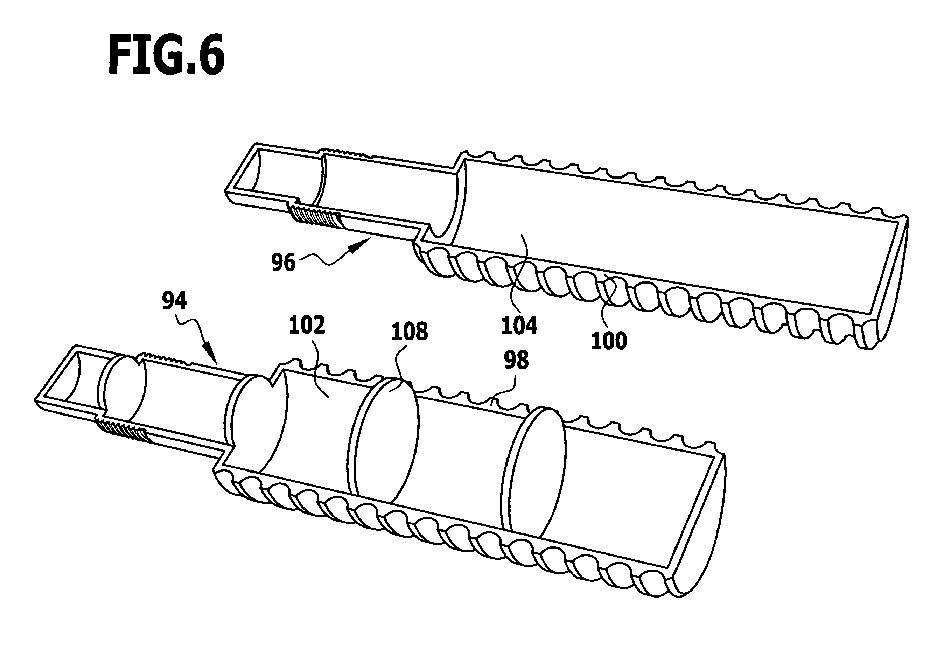

Bei einem weiteren Ausführungsbeispiel (Figur 6) wird als Element eines Kugelgewindetriebs eine Gewindespindel aus einem ersten Vorkörper 94 und einem zweiten Vorkörper 96 hergestellt. Die beiden Vorkörper 94, 96 werden dabei als Grünteil-Formlinge hergestellt.

Der erste Vorkörper 94 weist einen ersten Fügebereich 98 und der zweite Vorkörper 96 weist einen zweiten Fügebereich 100 auf. Die beiden Fügebereiche 98, 100 sind aneinander angepaßt; über sie lassen sich die beiden Vorkörper 94, 96 miteinander verbinden, um die Gewindespindel herzustellen.

Der erste Vorkörper 94 weist eine oder mehrere Ausnehmungen 102 auf. Entsprechend weist der zweite Vorkörper 96 eine oder mehrere Ausnehmungen 104 auf. Der erste Vorkörper 94 ist dadurch in einem Gewindebereich 106 halbschalenförmig ausgebildet. Das gleiche gilt für den zweiten Vorkörper 96.

Es können dabei beispielsweise in dem ersten Vorkörper 94 ein oder mehrere Scheibenelemente 108 angeordnet sein. Diese dienen zur zusätzlichen Abstützung der beiden Vorkörper 94, 96 aneinander und damit zur Vergrößerung von Fügeflächen der Fügebereiche 98, 100.

Die beiden Vorkörper 94, 96 werden vor oder nach der Braunteil-Herstellung miteinander in Kontakt gebracht. Sie werden miteinander in Kontakt stehend gesintert. Dadurch ergibt sich eine metallurgische Verbindung der Einzelteile miteinander.

Auf diese Weise läßt sich eine Hohl-Gewindespindel mit einem oder mehreren nicht zusammenhängenden inneren Hohlräumen herstellen, wobei die Hohlräume über die Ausnehmungen 102 und 104 gebildet sind.

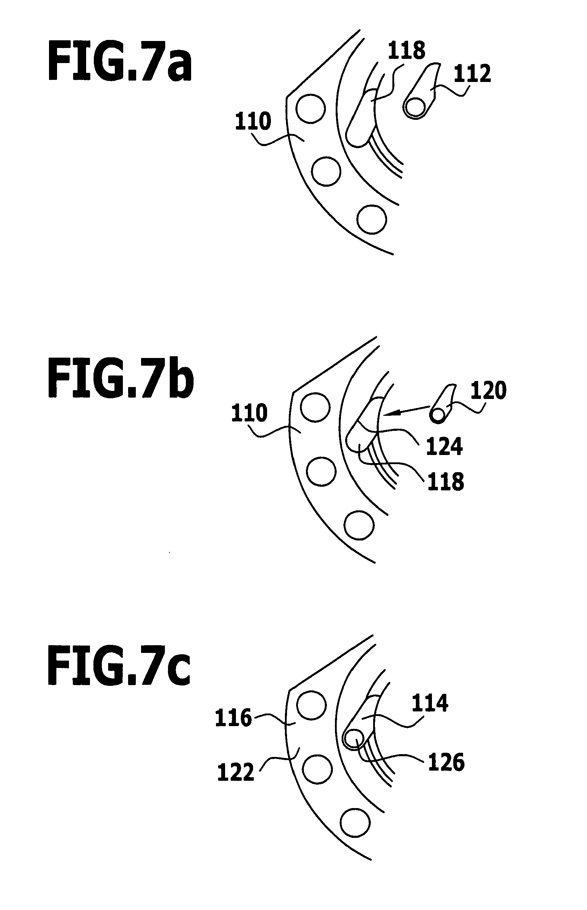

Bei einem weiteren Ausführungsbeispiel des erfindungsgemäßen Verfahrens wird eine Verbindung zwischen einem ersten Vorkörper 110 und einem zweiten Vorkörper 112 unter Ausnutzung der Volumenverringerung bei der Entbinderung hergestellt (Figur 7(a) bis 7(c)).

Das Verfahren wird dabei im Zusammenhang mit der Verbindung eines Umlenkstücks 114 an einer Gewindemutter 116 (Figur 7(c)) erläutert.

Der erste Vorkörper 110 ist ein Vorkörper für die Gewindemutter 116. Die Gewindemutter 116 wird pulvermetallurgisch hergestellt. Der Vorkörper 110 wird als Grünteil-Vorkörper mit einer Aufnahme 118 für das Umlenkstück 114 hergestellt.

Der zweite Vorkörper 112 (der Umlenkstück-Vorkörper) wird ebenfalls als Grünteil hergestellt.

Der zweite Vorkörper 112 wird dann in einen zweiten Braunteil-Vorkörper 120 gewandelt (Figur 7(b)). Durch die Entbinderung tritt eine Volumenverringerung auf, d. h. das Volumen des zweiten Braunteil-Vorkörpers 120 ist kleiner als das Volumen des zweiten Grünteil-Vorkörpers 112.

Die Aufnahme 118 des ersten Vorkörpers 110 ist derart angepaßt an das Umlenkstück 114, daß in dem endgültig hergestellten Werkstück das Umlenkstück paßgenau sitzt. Durch die Volumenverringerung des zweiten Braunteil-Vorkörpers 120 im Vergleich zu dem zweiten Grünteil-Vorkörper 112 kann der zweite Braunteil-Vorkörper 120 (der Umlenkstück-Braunteil-Vorkörper) in die Aufnahme 118 des ersten Grünteil-Vorkörpers 110 eingesetzt werden (Figur 7(b)).

Anschließend wird der erste Grünteil-Vorkörper 110 in einen ersten Braunteil-Vorkörper 122 (Figur 7(c)) gewandelt. Dadurch tritt eine Volumenverringerung auf, wobei die Volumenverringerung auch an einem Fügebereich 124 der Aufnahme 118 eintritt. Dadurch läßt sich der erste Braunteill-Vorkörper auf den zweiten Braunteil-Vorkörper 120 aufschrumpfen, um eine sichere Verbindung zu erhalten.

Aus dieser Braunteil-Vorkörper-Kombination läßt sich dann das endgültige Werkstück 116 durch Sinterung herstellen, wobei bei der Sinterung noch eine metallurgische Verbindung zwischen dem Umlenkstück 114 und der Gewindemutter 116 erreicht wird.

Das Umlenkstück 114 ist mit einem Eingang bzw. Ausgang 126 für Wälzkörper versehen.

## Patentansprüche

1. Verfahren zur Herstellung eines Kugelgewindetriebs, welcher mindestens ein pulvermetallurgisch hergestelltes Element aufweist, bei dem das mindestens eine Element aus einer Mehrzahl von Teilen hergestellt wird, wobei mindestens ein erster Vorkörper mit einem ersten Fügebereich und ein zweiter Vorkörper mit einem zweiten Fügebereich hergestellt werden und der erste Vorkörper und der zweite Vorkörper über den ersten Fügebereich und den zweiten Fügebereich vor dem Sintern und/oder beim Sintern in Kontakt gebracht sind oder werden.

2. Verfahren nach Anspruch 1, **dadurch gekennzeichnet, daß** der erste Vorkörper und der zweite Vorkörper als getrennte Formteile hergestellt werden.

3. Verfahren nach Anspruch 1 oder 2, **dadurch gekennzeichnet, daß** der erste Vorkörper und der zweite Vorkörper als getrennte Grünteile und/oder Braunteile hergestellt werden.

4. Verfahren nach Anspruch 2 oder 3, **dadurch gekennzeichnet, daß** der erste Vorkörper und/oder der zweite Vorkörper mit einer Wälzkörperführung versehen wird.

5. Verfahren nach einem der vorangehenden Ansprüche, **dadurch gekennzeichnet, daß** mindestens zwei Grünteil-Vorkörper hergestellt werden, welche in einen oder mehrere Braunteil-Vorkörper umgewandelt werden und der oder die Braunteil-Vorkörper gesintert werden.

6. Verfahren nach einem der vorangehenden Ansprüche, **dadurch gekennzeichnet, daß** bei der Braunteil-Herstellung der erste Vorkörper und der zweite Vorkörper in Kontakt gebracht sind.

7. Verfahren nach einem der vorangehenden Ansprüche, **dadurch gekennzeichnet, daß** ein erster Braunteil-Vorkörper und ein zweiter Braunteil-Vorkörper getrennt hergestellt werden.

8. Verfahren nach einem der vorangehenden Ansprüche, **dadurch gekennzeichnet, daß** zur Herstellung einer Verbindung der erste Vorkörper und der zweite Vorkörper aneinander positioniert werden.

9. Verfahren nach einem der vorangehenden Ansprüche, **dadurch gekennzeichnet, daß** der erste Vorkörper mit dem zweiten Vorkörper durch Volumenverringerung beim Entbindern und/oder Sintern verbunden wird.

10. Verfahren nach einem der vorangehenden Ansprüche, **dadurch gekennzeichnet, daß** ein Braunteil-Vorkörper und ein Grünteil-Vorkörper getrennt hergestellt werden und eine Verbindung zwischen den Vorkörpern über die Braunteilwandlung des Grünteil-Vorkörpers erfolgt.

11. Verfahren nach Anspruch 10, **dadurch gekennzeichnet, daß** der Günteil-Vorkörper mit einer oder mehreren Aufnahmen für einen Verbindungsbereich des Braunteil-Vorkörpers hergestellt wird.

12. Verfahren nach Anspruch 10 oder 11, **dadurch gekennzeichnet, daß** der Grünteil-Vorkörper über Entbinderung auf den Braunteil-Vorkörper aufgeschrumpft wird und/oder ein Formschluß erzeugt wird.

13. Verfahren nach einem der vorangehenden Ansprüche, **dadurch gekennzeichnet, daß** der erste Fügebereich und der zweite Fügebereich so aneinander angepaßt ausgebildet werden, daß bei korrekter Positionierung aneinander die relative Bewegung des ersten Vorkörpers und des zweiten Vorkörpers mindestens in einer Richtung gesperrt wird.

14. Verfahren nach einem der vorangehenden Ansprüche, **dadurch gekennzeichnet, daß** der erste Fügebereich und der zweite Fügebereich so aneinander angepaßt ausgebildet werden, daß der eine Fügebereich mindestens eine Ausnehmung aufweist, in welcher ein zugeordnetes Anlageelement des anderen Fügebereichs anlegbar ist.

15. Verfahren nach einem der vorangehenden Ansprüche, **dadurch gekennzeichnet, daß** der erste Vorkörper und der zweite Vorkörper gleich ausgebildet werden.

16. Verfahren nach Anspruch 15, **dadurch gekennzeichnet, daß** der erste Vorkörper und der zweite Vorkörper in der gleichen Form hergestellt werden.

17. Verfahren nach einem der vorangehenden Ansprüche, **dadurch gekennzeichnet, daß** das mindestens eine Element mit einer Wälzkörperführung versehen wird.

18. Verfahren nach einem der vorangehenden Ansprüche, **dadurch gekennzeichnet, daß** das mindestens eine Element ein Umlenkstück für Wälzkörper ist.

19. Verfahren nach einem der vorangehenden Ansprüche, **dadurch gekennzeichnet, daß** das mindestens eine Element eine Gewindemutter ist.

20. Verfahren nach Anspruch 19, **dadurch gekennzeichnet, daß** ein oder mehrere Umlenkelemente an der Gewindemutter angeordnet werden.

21. Verfahren nach Anspruch 20, **dadurch gekennzeichnet, daß** eine oder mehrere Umlenkleisten an der Gewindemutter angeordnet werden.

22. Verfahren nach einem der vorangehenden Ansprüche, **dadurch gekennzeichnet, daß** das mindestens eine Element eine Gewindespindel ist.

23. Verfahren nach Anspruch 22, **dadurch gekennzeichnet, daß** die Gewindespindel einen oder mehrere Hohlräume aufweist.

24. Verfahren nach Anspruch 22 oder 23, **dadurch gekennzeichnet, daß** ein oder mehrere Umlenkelemente an der Gewindespindel angeordnet werden.

25. Verfahren nach einem der vorangehenden Ansprüche, **dadurch gekennzeichnet, daß** der erste Vorkörper und der zweite Vorkörper metallurgisch verbunden werden.

26. Verfahren nach einem der vorangehenden Ansprüche, **dadurch gekennzeichnet, daß** der erste Vorkörper und der zweite Vorkörper schraubenfrei und bolzenfrei und kleberfrei verbunden werden.

27. Kugelgewindetrieb, welcher mindestens ein Element (46) aufweist, welches pulvermetallurgisch hergestellt ist, wobei das mindestens eine Element (46) mehrteilig hergestellt ist und die Teile (48, 50) über einen Verbindungsbereich, welcher jeweils Fügebereiche (52, 54) der Teile (48, 50) umfaßt, metallurgisch verbunden sind.

28. Kugelgewindetrieb nach Anspruch 27, **dadurch gekennzeichnet, daß** der Verbindungsbereich mittels Entfernen von Bindemittel und/oder Sintern entstanden ist.

29. Kugelgewindetrieb nach Anspruch 27 oder 28, **dadurch gekennzeichnet, daß** die Teile (48, 50) schraubenfrei und bolzenfrei verbunden sind.

30. Kugelgewindetrieb nach einem der Ansprüche 27 bis 29, **dadurch gekennzeichnet, daß** das mindestens eine Element (46) eine oder mehrere Ausnehmungen aufweist.

31. Kugelgewindetrieb nach einem der Ansprüche 27 bis 30, **dadurch gekennzeichnet, daß** das mindestens eine Element eine oder mehrere Führungen für Wälzkörper (24) aufweist.

32. Kugelgewindetrieb nach Anspruch 31, **dadurch gekennzeichnet, daß** die mindestens eine Führung geschlossen ist und einen Eingang und Ausgang aufweist.

33. Kugelgewindetrieb nach einem der Ansprüche 27 bis 32, **dadurch gekennzeichnet, daß** das mindestens eine Element ein Umlenkstück (46) ist.

34. Kugelgewindetrieb nach Anspruch 33, **dadurch gekennzeichnet, daß** das Umlenkstück (46) eine innenliegende Wälzkörperführungsbahn aufweist.

35. Kugelgewindetrieb nach einem der Ansprüche 27 bis 34, **dadurch gekennzeichnet, daß** das mindestens eine Element eine Gewindemutter ist.

36. Kugelgewindetrieb nach Anspruch 34, **dadurch gekennzeichnet, daß** an der Gewindemutter ein oder mehrere Umlenkelemente angeordnet sind.

37. Kugelgewindetrieb nach einem der Ansprüche 27 bis 36, **dadurch gekennzeichnet, daß** das mindestens eine Element eine Gewindespindel (80) ist.

38. Kugelgewindetrieb nach Anspruch 37, **dadurch gekennzeichnet, daß** die Gewindespindel eine Hohlspindel ist.

39. Kugelgewindetrieb nach Anspruch 37 oder 38, **dadurch gekennzeichnet, daß** an der Gewindespindel (80) ein oder mehrere Umlenkelemente (82) angeordnet sind.

40. Kugelgewindetrieb nach einem der Ansprüche 27 bis 39, **dadurch gekennzeichnet, daß** das mindestens eine Element (46) einstückig ist.
